# EUROPÄISCHE PATENTANMELDUNG

(11) **EP 3 456 794 A1**
(43) Veröffentlichungstag der Anmeldung: **20.03.2019**
(21) Anmeldenummer: 17020497.8
(22) Anmeldetag: 26.10.2017
(51) Int. Cl.: C09K 5/10, H05H 1/34

(54) **NANOFLUID-KÜHLUNG FÜR PLASMABRENNER**

(30) Priorität: 14.09.2017 DE 102017008662
(71) Anmelder: Linde Aktiengesellschaft, 80331 München (DE)
(72) Erfinder: Hussary, Nakhleh A., 85737 Ismaning (DE)

(57) **Zusammenfassung**

Die Erfindung betrifft ein Nanofluid (2) zum Kühlen eines Plasmabrenners (1), wobei das Nanofluid (2) durch eine Suspension gebildet ist, die eine Flüssigkeit und darin suspendierte Nanopartikel aufweist. Erfindungsgemäß ist vorgesehen, dass der Anteil der Nanopartikel in dem Nanofluid kleiner oder gleich 10 Vol.-% ist, wobei die elektrische Leitfähigkeit des Nanofluids kleiner 70 µS/cm ist.

## Beschreibung

Die Erfindung betrifft ein Nanofluid, die Verwendung eines erfindungsgemäßen Nanofluids, sowie ein Verfahren zum Kühlen eines Plasmabrenners mit einem erfindungsgemäßen Nanofluid sowie ein Plasmabrennersystem mit einem Nanofluid.

Das Erzeugen von Plasmen hat eine lange Geschichte und betrifft ein weites Feld von Anwendungen, wie z.B. das Schneiden und Fügen. Diese Anwendungen verwenden üblicherweise Plasmabögen bzw. Lichtbögen, wobei regelmäßig Wärme in hohen Ausmaßen erzeugt wird, insbesondere an den verwendeten Elektroden (z.B. Kathode und Anode) sowie an anderen Komponenten des verwendeten Plasmabrenners, wie z.B. Düsen und Schildkomponenten.

Die erzeugte Wärme kann sich zerstörend auf die besagten Komponenten auswirken. Um einen reibungsfreien Schneid- bzw. Schweißprozess garantieren zu können, müssen daher Maßnahmen getroffen werden, die die Wärmeerzeugung und damit verbundene Abnutzungserscheinungen beherrschbar machen. Eine Möglichkeit besteht in der Kühlung von durch Wärmeentwicklung betroffenen Komponenten des Plasmabrenners.

Bestehende Methoden zum hinreichenden Kühlen der entsprechenden Komponenten eines Plasmabrenners versuchen: (1) das Kühlmittel mit einem hohen Volumenstrom sowie hohem Druck durch den Brenner zu leiten; (2) eine Turbulenz des Kühlmittels zu erhöhen, um den Wärmetransfer zu verbessern; (3) die Kühlmittelgeschwindigkeit im Bereich der kritischen Komponenten zu erhöhen, um den Wärmetransfer zu verbessern; (4) Materialien für den Brenner zu verwenden, die eine hohe Wärmeleitfähigkeit und -diffusion aufweisen, wie z.B. Kupfer, Silber etc.; (5) die Oberfläche der zu kühlenden Komponenten zu vergrößern.

Hinsichtlich der oben ausgeführten Problematik liegt der vorliegenden Erfindung daher die Aufgabe zugrunde eine verbesserte Kühlung für einen Plasmabrenner zu schaffen. Diese Aufgabe wird durch ein Nanofluid mit den Merkmalen des Anspruchs 1 sowie durch die weiteren Erfindungsaspekte gelöst. Vorteilhafte Ausgestaltungen der Erfindung sind in den entsprechenden Unteransprüchen angegeben und werden nachfolgend beschrieben.

Gemäß Anspruch 1 ist ein Nanofluid zum Kühlen eines Plasmabrenners vorgesehen, wobei das Nanofluid durch eine Suspension gebildet ist, die eine Flüssigkeit und darin suspendierte Nanopartikel aufweist.

Erfindungsgemäß ist vorgesehen, dass der Anteil der Nanopartikel in dem Nanofluid kleiner oder gleich 10 Vol.-% ist, und wobei die elektrische Leitfähigkeit des Nanofluids kleiner 70 µS/cm ist.

Die einzelnen Nanopartikel sind insbesondere dadurch gekennzeichnet, dass sie einen Durchmesser im Bereich von 1 nm bis 500 nm aufweisen, insbesondere im Bereich von 1 nm bis 200 nm, insbesondere im Bereich von 1 nm bis 100 nm, insbesondere im Bereich von 1 nm bis 50 nm.

Gemäß einer Ausführungsform des erfindungsgemäßen Nanofluids ist vorgesehen, dass die Nanopartikel durch Nanoröhren gebildet sind. Die Nanoröhren können Kohlenstoff aufweisen bzw. können daraus gebildet sein. Die Nanoröhren können ebenfalls durch die oben angegebenen Durchmesserbereiche gekennzeichnet sein.

Weiterhin ist gemäß einer Ausführungsform des erfindungsgemäßen Nanofluids vorgesehen, dass die Nanopartikel aus einem der folgenden Stoffe gebildet sind oder einen der folgenden Stoffe aufweisen: ein Oxid, ein Metalloxid, ein Kupferoxid, ein Aluminiumoxid, ein Metallnitrid, ein Titanoxid, Titan(IV)-oxid, Magnetit (Fe₃O₄), ein Carbid, ein Zinkoxid, ein Silikonoxid, MnFeO, Fe₃O₂, Al₂O₃, ZnO, TiO₂, CuO, SiO₂, Kohienstoffnanoröhren.

Weiterhin können auch Nanopartikel verwendet werden, die reine Metalle aufweisen bzw. aus reinen Metallen bestehen, insbesondere in geringeren Mengen, um die gewünschte elektrische Leitfähigkeit bzw. den gewünschten spezifischen Widerstand zu erhalten. Mögliche Metalle sind: Silber, Aluminium, Gold etc. Eine bevorzugte Ausführungsform des erfindungsgemäßen Nanofluids enthält Glykol sowie Aluminiumoxid.

Weiterhin ist gemäß einer Ausführungsform des erfindungsgemäßen Nanofluids vorgesehen, dass die Flüssigkeit einen der folgenden Stoffe aufweist oder durch einen der folgenden Stoffe gebildet ist: Wasser, insbesondere entionisiertes Wasser, Glykol, Propylen, Ethylen, eine Mischung aufweisend Wasser (insbesondere entionisiertes Wasser) und Glykol (insbesondere Propylen und/oder Ethylen).

Gemäß einer Ausführungsform weist die Flüssigkeit ein Gemisch aus Glycol und Wasser, insbesondere deionisiertes Wasser, auf, wobei Glycol einen Anteil von 10 Vol.-% bis 50 Vol.-% und Wasser einen Anteil von 50 Vol.-% bis 90 Vol.-% aufweisen kann. Hierdurch kann die Flüssigkeit insbesondere bei Umgebungstemperaturen im Bereich von 0°C bis -40°C eingesetzt werden.

Gemäß einer weiteren Ausführungsform des erfindungsgemäßen Nanofluids ist vorgesehen, dass der Anteil der Nanopartikel in dem Nanofluid im Bereich von 0,01 Vol.-% bis 10 Vol.-% liegt, insbesondere 0,01 Vol.-% bis 7 Vol.-%, insbesondere 1 Vol.-% bis 7 Vol.-%, insbesondere 0,01 Vol.-% bis 0,5 Vol.-%.

Gemäß einer Ausführungsform des erfindungsgemäßen Nanofluids ist vorgesehen, dass die elektrische Leitfähigkeit des Nanofluids kleiner ist als 50 µS/cm, insbesondere kleiner als 30 µS/cm, insbesondere kleiner als 20 µS/cm.

Weiterhin ist gemäß einer Ausführungsform des erfindungsgemäßen Nanofluids ist vorgesehen, dass die elektrische Leitfähigkeit größer ist als 0,05 µS/cm, insbesondere größer als 0,5 µS/cm, insbesondere größer als 1 µS/cm, insbesondere größer als 10 µS/cm, insbesondere größer als 20 µS/cm, insbesondere größer als 30 µS/cm, insbesondere größer als 50 µS/cm. Diese unteren Grenzen können in sinnvollerweise mit den oben genannten oberen Grenzen der Leitfähigkeit kombiniert werden, um entsprechende bevorzugte Bereiche für die Leitfähigkeit zu erhalten.

Gemäß einem weiteren Aspekt der vorliegenden Erfindung wird eine Verwendung eines erfindungsgemäßen Nanofluids als Kühlmittel in einem Plasmabrenner offenbart.

Ein weiterer Aspekt der vorliegenden Erfindung betrifft ein Verfahren zum Kühlen eines Plasmabrenners, wobei ein erfindungsgemäßen Nanofluid zum Kühlen zumindest einer Komponente des Plasmabrenners in thermischen Kontakt mit der mindestens einen Komponente gebracht wird, so dass Wärme von der mindestens einen Komponente auf das Nanofluid übertragen wird.

Bei der Komponente des Plasmabrenners kann es sich im Rahmen der vorliegenden Erfindung um jegliche Komponente des Plasmabrenners handeln, die durch eine Wärmeentwicklung betroffen ist. Insbesondere handelt es sich bei der Komponente um eine Elektrode oder eine Düse des Plasmabrenners. Das Kühlmittel kann auch mehrere Komponenten des Plasmabrenners kühlen (z.B. eine Elektrode sowie eine Düse des Plasmabrenners sowie ggf. weitere Komponenten).

Gemäß einer Ausführungsform des erfindungsgemäßen Verfahrens ist vorgesehen, dass mit dem Plasmabrenner Lichtbogenschweißen oder Wolfram-Inertgasschweißen durchgeführt wird, wobei gemäß einer Ausführungsform ein Lichtbogen mit einem Hochspannungssignal im Bereich von 500 V bis 1000 V gestartet wird, und wobei gemäß einer Ausführungsform die elektrische Leitfähigkeit des zum Kühlen verwendeten Nanofluids kleiner ist als 20 µS/cm. Das Hochspannungssignal wird beim Wolfram-Inertgasschweißen insbesondere zwischen einer Wolframelektrode des Brenners und dem Werkstück angelegt. Beim Lichtbogenschweißen wird das Hochspannungssignal insbesondere zwischen einer Elektrode des Brenners und der Düse des Brenners angelegt.

Gemäß einer weiteren Ausführungsform des erfindungsgemäßen Verfahrens ist vorgesehen, dass mit dem Plasmabrenner Plasmaschneiden durchgeführt wird, wobei gemäß einer Ausführungsform ein Lichtbogen mit einem Hochspannungssignal von bis zu 5000 V gestartet wird, und wobei gemäß einer Ausführungsform die elektrische Leitfähigkeit des zum Kühlen verwendeten Nanofluids kleiner ist als 10 µS/cm. Hier kann das Hochspannungssignal insbesondere zwischen einer Elektrode des Brenners und einer Düse des Brenners angelegt werden, wobei insbesondere zunächst ein Pilotlichtbogen zwischen der Elektrode und der Düse erzeugt wird, der anschließend durch eine plasmabildende Gasströmung aus der Düse herausbewegt wird. Die Energiequelle kann sodann den Lichtbogen auf der Platte detektieren und der Lichtbogen kann dann vollständig zum Werkstück transferiert werden. Die Düse wird anschließend insbesondere vom Schaltkreis getrennt und verbleibt auf einem Floatingpotential.

Weiterhin ist gemäß einer Ausführungsform des erfindungsgemäßen Verfahrens vorgesehen, dass eine Betriebstemperatur des Nanofluids beim Kühlen der mindestens einen Komponente im Bereich von 20°C bis 60°C, insbesondere im Bereich von 30°C bis 60°C gehalten wird.

Schließlich betrifft ein weiterer Aspekt der vorliegenden Erfindung ein Plasmabrennersystem, aufweisend einen Plasmabrenner sowie ein erfindungsgemäßes Nanofluid zum Kühlen zumindest einer Komponente des Plasmabrenners.

Die durch die Erfindung insbesondere erzielten Vorteile, wie eine verbesserte Wärmeleitfähigkeit und einen verbesserten Wärmeübergangskoeffizienten verbessern insgesamt die Kühlung des Plasmabrenners und verlängern daher dessen Lebensdauer und Robustheit sowie insbesondere die Lebendauer der Verbrauchskomponenten (Elektroden, Düsen, Schilde etc.). Durch die verbesserte Kühlung können höhere elektrische Ströme und Leistungen verwendet werden. Weiterhin können weniger kostenintensive Materialien bei der Brennerkonstruktion verbaut werden. Weiterhin kann mittels der Erfindung die Einengung des Plasmabogens verbessert werden, was insbesondere für das Plasmascheiden und das Plasmabogenschweißen (PAW für Plasma Arc Welding) wichtig ist.

Weitere Merkmale und Vorteile der vorliegenden Erfindung sollen anhand der Beschreibung von Ausführungsbeispielen anhand der Figur erläutert werden. Es zeigt:

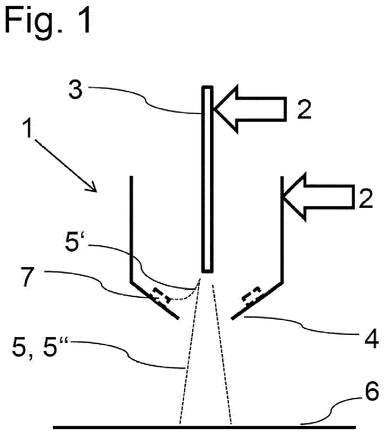

- Fig. 1: eine schematische Darstellung eines Plasmabrenners, wobei eine Komponente des Plasmabrenners mittels eines Nanofluids gekühlt wird.

Die Erfindung betrifft gemäß dem in der Figur 1 gezeigten Ausführungsbeispiel ein Nanofluid 2 zum Kühlen eines Plasmabrenners 1, wobei das Nanofluid 2 durch eine Suspension gebildet ist, die eine Flüssigkeit und darin suspendierte Nanopartikel aufweist. In einzelnen Ausführungsformen kann das Nanofluid 2 die hierin angegebenen Bestandteile aufweisen (siehe auch oben).

Das Nanofluid 2 kann z.B. zum Kühlen einer Komponente 3 des Plasmabrenners 1 verwendet werden, bei der es sich z.B. um eine Elektrode handeln kann. Es können ergänzend oder alternativ auch andere Komponenten, wie z.B. eine Düse 4 des Plasmabrenners 1, mittels des Nanofluids 2 gekühlt werden. Das Nanofluid kann hierzu durch den Plasmabrenner zirkuliert werden, wobei es mit der zu kühlenden Komponente in einen thermischen Kontakt gebracht wird, so dass Wärme von der betreffenden Komponente auf das Nanofluid 2 übertragbar ist und mittels des Nanofluids 2 insbesondere abtransportierbar ist.

Je nach Anwendung kann die Elektrode 3 des Plasmabrenners 1 auch aus der Düse 4 herausragen. Die Elektrode 3 kann als Kathode ausgebildet sein, wobei weiterhin -je nach Anwendung - die Anode durch ein (zu bearbeitendes) Werkstück 6 gebildet sein kann. Hierbei kann ein Lichtbogen 5 zwischen der Elektrode 3 und dem Werkstück aufgebaut werden (z.B. Wolfram-Inertgasschweißen).

Weiterhin kann eine Anode 7 auch innerhalb der Düse 4 vorgesehen sein. Hier wird der Lichtbogen 5' innerhalb der Düse 4 zwischen den beiden Elektroden 3, 7 erzeugt und ein Plasmastrahl 5", der aus einem geeigneten Träger- bzw Arbeitsgas erzeugt wird, wird aus der Düse 4 ausgestoßen (z.B. Plasmabogenschweißen).

Erfindungsgemäß ist vorzugsweise vorgesehen, dass der Anteil der Nanopartikel in dem Nanofluid kleiner oder gleich 10 Vol.-% ist, wobei die elektrische Leitfähigkeit des Nanofluids kleiner 70 µS/cm ist.

Gemäß einem Beispiel der Erfindung ist vorgesehen, dass mit dem Plasmabrenner 1 Lichtbogenschweißen, insbesondere Wolfram-Inertgasschweißen, oder Plasmabogenschweißen (siehe oben) durchgeführt wird, wobei ein Lichtbogen 5 bzw. 5' mit einem Hochspannungssignal im Bereich von 500 V bis 1000 V gestartet wird, und wobei die elektrische Leitfähigkeit des zum Kühlen verwendeten Nanofluids 2 kleiner ist als 20 µS/cm.

Gemäß einem weiteren Beispiel der Erfindung ist vorgesehen, dass mit dem Plasmabrenner 1 Plasmaschneiden durchgeführt wird, wobei ein Lichtbogen 5, 5' mit einem Hochspannungssignal von bis zu 5000 V gestartet wird, und wobei die elektrische Leitfähigkeit des zum Kühlen verwendeten Nanofluids 2 kleiner ist als 10 µS/cm ist.

Vorzugsweise liegt eine Betriebstemperatur des Nanofluids 2 beim Kühlen der mindestens einen Komponente 3, 4, 7 im Bereich von 20°C bis 60°C, insbesondere im Bereich von 30°C bis 60°C.

Ein exemplarisches erfindungsgemäßes Nanofluid kann z.B. eine der folgenden Zusammensetzungen aufweisen:
- Deionisiertes Wasser mit 1 Vol.-% Aluminiumoxid-Nanopartikeln,
- Deionisiertes Wasser mit 2 Vol.-% Aluminiumoxid-Nanopartikeln,
- 50 Vol.-% Glycol und 49 Vol.-% deionisiertes Wasser sowie 1 Vol.-% Aluminiumoxid-Nanopartikel,
- 50 Vol.-% Glycol und 48 Vol.-% deionisiertes Wasser sowie 2 Vol.-% Aluminiumoxid-Nanopartikel.

Der Wert der Leitfähigkeit bzw. des spezifischen Widerstandes kann gemessen werden, während der Anteil an Nanopartikeln erhöht wird. Hierbei kann man den Nanopartikelgehalt soweit erhöhen, dass ein maximaler Leitfähigkeitswert, der einzustellen ist, nicht überschritten wird.

### Bezugszeichen

| | |
|---|---|
| 1 | Plasmabrenner |
| 2 | Nanofluid |
| 3 | Elektrode (z.B. Kathode) |
| 4 | Düse |
| 5, 5' | Lichtbogen |
| 5" | Plasmastrahl |
| 6 | Werkstück |
| 7 | Anode |

## Patentansprüche

1. Nanofluid (2) zum Kühlen eines Plasmabrenners (1), wobei das Nanofluid (2) durch eine Suspension gebildet ist, die eine Flüssigkeit und darin suspendierte Nanopartikel aufweist,
**dadurch gekennzeichnet, dass** der Anteil der Nanopartikel in dem Nanofluid kleiner oder gleich 10 Vol.-% ist, wobei die elektrische Leitfähigkeit des Nanofluids kleiner 70 µS/cm ist.

2. Nanofluid gemäß Anspruch 1, **dadurch gekennzeichnet, dass** die Nanopartikel durch Nanoröhren gebildet sind.

3. Nanofluid gemäß Anspruch 1 oder 2, **dadurch gekennzeichnet, dass** die Nanopartikel aus einem der folgenden Stoffe gebildet sind oder einen der folgenden Stoffe aufweisen: ein Metalloxid, ein Metallnitrid.

4. Nanofluid gemäß einem der vorgehenden Ansprüche, **dadurch gekennzeichnet, dass** die Flüssigkeit einen der folgenden Stoffe aufweist oder durch einen der folgenden Stoffe gebildet ist: Wasser, insbesondere entionisiertes Wasser, Glykol, Propylen, Ethylen, eine Mischung aufweisend Wasser und Glykol.

5. Nanofluid gemäß einem der vorgehenden Ansprüche, **dadurch gekennzeichnet, dass** der Anteil der Nanopartikel in dem Nanofluid im Bereich von 0,01 Vol.-% bis 10 Vol.-% liegt, insbesondere 0,01 Vol.-% bis 7 Vol.-%, insbesondere 1 Vol.-% bis 7 Vol.-%, insbesondere 0,01 Vol.-% bis 0,5 Vol.-%.

6. Nanofluid gemäß einem der vorgehenden Ansprüche, **dadurch gekennzeichnet, dass** die elektrische Leitfähigkeit des Nanofluids kleiner ist als 50 µS/cm, insbesondere kleiner als 30 µS/cm, insbesondere kleiner als 20 µS/cm

7. Nanofluid gemäß einem der vorgehenden Ansprüche, **dadurch gekennzeichnet, dass** die elektrische Leitfähigkeit größer ist als 0,05 µS/cm, insbesondere größer als 0,5 µS/cm, insbesondere größer als 1 µS/cm, insbesondere größer als 10 µS/cm, insbesondere größer als 20 µS/cm, insbesondere größer als 30 µS/cm, insbesondere größer als 50 µS/cm.

8. Verwendung eines Nanofluids nach einem der vorhergehenden Ansprüche als Kühlmittel in einem Plasmabrenner

9. Verfahren zum Kühlen eines Plasmabrenners (1), wobei ein Nanofluid (2) gemäß einem der Ansprüche 1 bis 7 zum Kühlen zumindest einer Komponente (3) des Plasmabrenners (1) in thermischen Kontakt mit der mindestens einen Komponente (3) gebracht wird, so dass Wärme von der mindestens einen Komponente (3) auf das Nanofluid (2) übertragen wird.

10. Verfahren nach Anspruch 9, **dadurch gekennzeichnet, dass** mit dem Plasmabrenner (1) Lichtbogenschweißen, insbesondere Wolfram-Inertgasschweißen, oder Plasmabogenschweißen durchgeführt wird, wobei ein Lichtbogen (5, 5') mit einem Hochspannungssignal im Bereich von 500 V bis 1000 V gestartet wird, und wobei die elektrische Leitfähigkeit des zum Kühlen verwendeten Nanofluids (2) kleiner ist als 20 µS/cm.

11. Verfahren nach Anspruch 9, **dadurch gekennzeichnet, dass** mit dem Plasmabrenner (1) Plasmaschneiden durchgeführt wird, wobei ein Lichtbogen (5, 5') mit einem Hochspannungssignal von bis zu 5000 V gestartet wird, und wobei die elektrische Leitfähigkeit des zum Kühlen verwendeten Nanofluids (2) kleiner ist als 10 µS/cm.

12. Verfahren nach Anspruch 9, **dadurch gekennzeichnet, dass** eine Betriebstemperatur des Nanofluids (2) beim Kühlen der mindestens einen Komponente (3) im Bereich von 20°C bis 60°C, insbesondere im Bereich von 30°C bis 60°C gehalten wird.

13. Plasmabrennersystem, aufweisend einen Plasmabrenner (1) sowie ein Nanofluid (2) nach einem der Ansprüche 1 bis 7 zum Kühlen zumindest einer Komponente des Plasmabrenners (1).
